# FASCICULE DE BREVET EUROPEEN

(11) **EP 3 196 815 B1**
(45) Date de publication et mention de la délivrance du brevet: **11.09.2019**
(21) Numéro de dépôt: 17151551.3
(22) Date de dépôt: 16.01.2017
(51) Int. Cl.: G01C 21/34, G01S 19/24, G06Q 20/10, G06Q 30/02, H04L 29/12, H04L 29/08, H04W 76/10, G06Q 10/06, G06Q 10/08, G06Q 30/04, G06Q 50/30

(54) **PROCÉDÉ DE DÉTECTION DE PASSAGERS, DE GESTION ET D'OPTIMISATION DE LEURS TRANSPORTS PARTAGES**
VERFAHREN ZUR ERFASSUNG VON PASSAGIEREN UND ZUR VERWALTUNG UND OPTIMIERUNG IHRES GEMEINSAMEN TRANSPORTS
METHOD FOR DETECTING PASSENGERS, FOR MANAGING AND OPTIMISING THE SHARED TRANSPORTATION THEREOF

(30) Priorité: 22.01.2016 FR 1650512
(43) Date de publication de la demande: 26.07.2017
(73) Titulaire: Perret, Stephane Jacques, 64122 Urrugne (FR)
(72) Inventeur: Perret, Stephane Jacques, 64122 Urrugne (FR)
(74) Mandataire: Aquinov

(56) Documents cités:
- FR-A1- 2 824 937
- FR-A1- 2 932 305
- FR-A1- 2 969 357
- FR-A1- 3 010 566
- US-A1- 2010 161 392
- US-A1- 2010 201 505
- US-A1- 2015 166 009
- Tore E Jonvik ET AL: "BLUETOOTH PAN and external IP networks", , 1 January 2003 (2003-01-01), XP055464974, DOI: 10.1007/978-0-387-35618-1_37 Retrieved from the Internet: URL:https://link.springer.com/content/pdf/ 10.1007/978-0-387-35618-1_8.pdf [retrieved on 2018-04-05]

## Description

La présente invention concerne un procédé de détection de passagers, de gestion et d'optimisation de leurs transports partagés.

Le transport partagé, connu aussi sous le nom de co-voiturage, propose à des personnes, sans lien particulier, de partager un trajet dans un même véhicule.

On sait que de très nombreux véhicules sont occupés par une seule personne, le conducteur. Ceci a pour conséquence de voir le nombre de véhicules croître quasiment en proportion directe de la croissance de la population. Ceci engendre un bilan énergétique négatif puisque toute l'énergie consommée est dédiée au transport d'une seule personne dans un véhicule apte à recevoir en plus du conducteur, au moins 1 voire 4 passagers, ceci pour la plupart des véhicules.

De plus, le nombre de véhicules croissant, la circulation voit sa fluidité diminuer, ce qui engendre des pertes de temps d'une part et une surconsommation d'énergie d'autre part, les bilans pollution et émission de carbone devenant alors encore plus négatifs.

Il existe donc des conducteurs qui se déplacent sur un trajet donné, avec des places disponibles, et des passagers qui seraient intéressés par ledit trajet.

On constate qu'il existe deux sortes de trajets suivant les distances et les trajets les plus récurrents sont les trajets domicile / lieu de travail. Ces trajets sont généralement de courte distance mais réguliers tant dans les destinations que dans les durées.

Des solutions ont été mises en oeuvre depuis une dizaine d'années consistant à mettre en relation ces passagers, sans lien direct avec le conducteur, souhaitant partager ledit trajet donné.

Un exemple peut être trouvé dans le document US2015/0166009, divulguant une solution reposant sur une unité centrale embarquée dans un véhicule dont la fonction peut être transférée au téléphone portable du conducteur.

Ces solutions passent par des sites informatiques de réservations à travers le réseau de connexion mondial Internet de façon à faire coïncider les offres et les demandes.

Ces sites requièrent une démarche volontaire et prévoient la transaction financière au moment de la réservation avec un paiement différé généralement jusqu'à la réalisation de la transaction. Le site qui assure la gestion de la transaction prélève une partie de ce paiement au titre des frais de gestion.

Par contre, les passagers aptes à recourir à des services de transport partagé sont, pour la très grande majorité voire l'intégralité, dotés de téléphones intelligents "smartphones", reliés au réseau de communication mondial et au système de Global Positioning System dit GPS permettant une localisation automatique.

De plus, ces mêmes téléphones intelligents sont dotés de moyens de communication radio de courte portée dits "Bluetooth", notamment "Bluetooth Low Energy" BLE très faible consommateur d'énergie ou encore par "Wifi".

Le but du présent procédé, utilisant une base de données et un serveur, est de détecter automatiquement, la présence de passagers dans un véhicule, de déterminer la distance parcourue et le temps de présence dans le véhicule ainsi que le trajet afin de procéder à une compensation financière d'une part et d'émettre au moins des propositions de co-voiturage entre conducteurs et passagers potentiels.

Le procédé permet d'attribuer une compensation financière au conducteur par le passager de façon à contribuer aux frais liés au trajet, sans avoir à réserver ou à payer une quelconque somme au préalable. De plus, la somme est parfaitement adaptée à la longueur de la course et/ou à la distance parcourue puisque les deux paramètres sont mesurés et enregistrés.

Le procédé selon la présente invention permet également de déterminer les trajets réguliers à des heures régulières et de proposer des co-voiturages à des passagers susceptibles d'effectuer le même trajet.

Le procédé selon la présente invention est maintenant décrit en détail suivant un mode de réalisation particulier, non limitatif, en regard des dessins annexés, dessins sur lesquels les figures représentent :
- Figure 1 : une vue de l'agencement des moyens d'identification et d'un serveur, et de l'entrée du conducteur dans ledit véhicule,
- Figure 2 : un synoptique d'entrée d'un premier passager dans ledit véhicule,
- Figure 3 : un synoptique d'entrée d'un second passager dans ledit véhicule,
- Figure 4 : un synoptique de sortie du premier passager dudit véhicule,
- Figure 5 : un synoptique de sortie du second passager dudit véhicule, et
- Figure 6 : un synoptique de sortie du conducteur dudit véhicule.

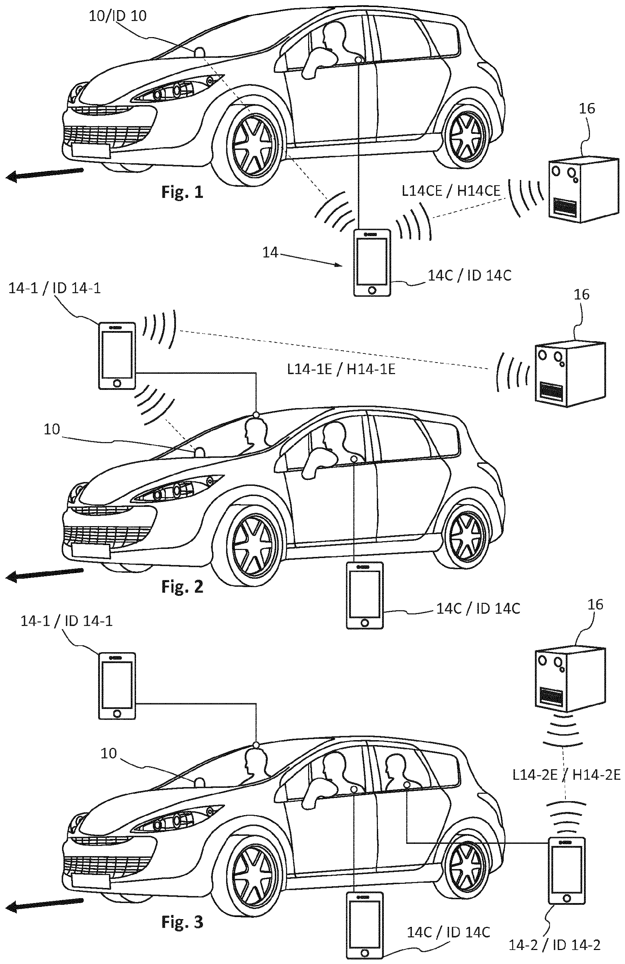

Le procédé selon la présente invention consiste à disposer des moyens d'identification 10 pouvant être scannés par un téléphone portable, sous la forme d'une balise par exemple, dans un véhicule 12, avec un identifiant ID10, ainsi que représenté sur la figure 1.

Ces moyens d'identification 10 présentent des fonctions particulières à savoir des moyens d'émission radio courte portée couvrant sensiblement les dimensions donc le volume du véhicule, du type connu sous la dénomination "Beacon". De tels moyens d'identification 10 peuvent être détectés lors d'un scan c'est-à-dire un balayage des fréquences par un téléphone intelligent par exemple.

De tels moyens d'identification 10 sont avantageusement alimentés de façon indépendante car la consommation électrique reste très limitée, voire ils peuvent être alimentés par le circuit électrique du véhicule. De même, n'ayant aucun lien avec le véhicule, ils peuvent être amovibles de façon que le conducteur puisse les déplacer en cas d'utilisation d'un véhicule différent.

Ces moyens d'identification 10 sont attachés au conducteur et au véhicule qu'il conduit lorsqu'il est en action de conduite et couvrent un volume de détection sensiblement égal à celui d'un véhicule. Ainsi dans une version portable, lesdits moyens d'identification 10, de petites dimensions, peuvent être changés de véhicule puisqu'ils sont attachés au conducteur et associés à un véhicule. De tels moyens d'identification 10 peuvent même être intégrés à un téléphone intelligent donc à celui du conducteur.

Dans une version plus évoluée, les moyens d'identification peuvent être reliés, voire intégrés au système combiné kit mains libres, GPS, audio du véhicule, tout en préservant la fonction nomade desdits moyens.

De tels moyens d'identification 10 sont capables d'être détectés par un téléphone intelligent 14 sur lequel une application logicielle de détection comprenant également une succession d'actions programmées a été téléchargée. Ces moyens d'identification 10 ne peuvent fonctionner que dans le volume correspondant, c'est-à-dire un espace limité, à condition que les moyens d'émission/réception à courte portée soient activés.

Les personnes concernées par le procédé selon l'invention disposent d'un téléphone intelligent 14, sur lequel l'application logicielle de détection a été téléchargée, de façon que lesdits moyens d'identification 10 puissent être détectés et sollicités par ledit téléphone intelligent.

Ledit téléphone intelligent 14 dispose, de façon connue, d'une application de localisation GPS et d'un lien avec le réseau mondial de communication Internet.

Un serveur 16, relié également au réseau mondial de communication Internet, peut être joint par chaque téléphone intelligent 14 grâce à son adresse IP (Internet Protocole) et le serveur peut joindre ledit téléphone intelligent afin d'établir une communication. Ce serveur 16 est un serveur dédié et associé à l'application logicielle téléchargée.

Dans un mode de mise en oeuvre du procédé selon la présente invention, le conducteur dispose d'un téléphone intelligent 14C, un premier passager dispose d'un téléphone intelligent 14-1 et un second passager dispose lui-aussi d'un téléphone intelligent 14-2. Tous ces téléphones sont chargés avec l'application logicielle.

Ainsi, lorsque le conducteur entre dans son véhicule, les moyens d'identification 10 avec le code d'identification ID10 détectent son téléphone intelligent 14C avec un identifiant ID14C, qui suit les étapes de la procédure de l'application logicielle. Le serveur 16 est sollicité par le téléphone intelligent 14C du conducteur de façon à enregistrer l'identifiant ID10 des moyens d'identification associés au conducteur, l'identifiant ID14C du téléphone intelligent 14C du conducteur, la localisation L14CE lors de l'entrée dans le véhicule et l'horodatage H14CE lors de l'entrée dudit conducteur dans le véhicule, voir figure 1.

Le conducteur se déplace avec son véhicule et lorsqu'un premier passager entre dans le véhicule, son téléphone intelligent 14-1 détecte les moyens d'identification 10 et ledit téléphone intelligent 14-1, selon les instructions de l'application logicielle, sollicite le serveur 16 de façon à enregistrer l'identifiant ID10 des moyens d'identification 10 associés au conducteur, l'identifiant ID14-1 du téléphone intelligent 14-1 du premier passager, la localisation L14-1E lors de l'entrée du premier passager dans le véhicule et l'horodatage H14-1E lors de l'entrée dudit premier passager dans le véhicule. Voir figure 2.

Le véhicule se déplace et un second passager entre dans le véhicule tandis que le premier passager y est encore. Lorsque ce second passager entre dans le véhicule, son téléphone intelligent 14-2 détecte les moyens d'identification 10 et, selon les instructions de l'application logicielle, le téléphone intelligent 14-2 sollicite à son tour le serveur 16 de façon à enregistrer l'identifiant ID10 des moyens d'identification 10 associés au conducteur, l'identifiant ID14-2 du téléphone intelligent 14-2 du second passager, la localisation L14-2E lors de l'entrée du second passager dans le véhicule et l'horodatage H14-2E lors de l'entrée dudit second passager dans le véhicule. Voir figure 3.

Le véhicule se déplace de nouveau et lorsque le second passager descend du véhicule, selon l'exemple retenu, le téléphone intelligent 14-2 de ce second passager ne détecte plus les moyens d'identification 10 associés au conducteur.

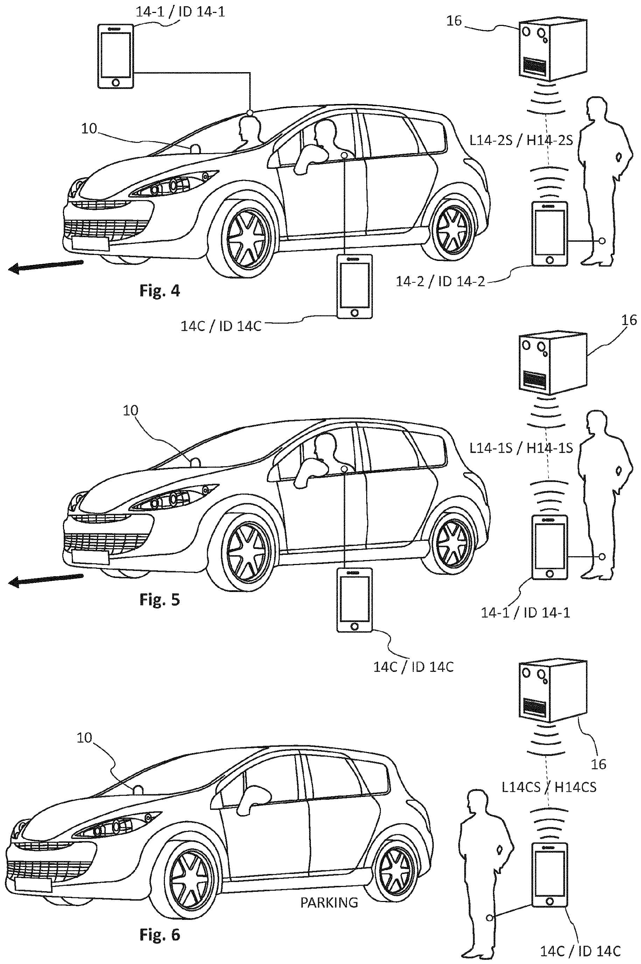

Dès lors, le procédé et donc l'application logicielle associée, prévoit de nouveau la connexion par le téléphone intelligent 14-2 au serveur 16 de façon à enregistrer l'identifiant ID10 des moyens d'identification 10 associés au conducteur, l'identifiant ID14-2 du téléphone intelligent 14-2, la localisation L14-2S lors de la sortie du second passager du véhicule et l'horodatage H14-2S lors de la sortie dudit second passager du véhicule. Voir figure 4.

Le serveur 16 dispose alors des données du départ et de l'arrivée du trajet permettant de calculer la compensation C2 correspondante, suivant une règle établie, financière ou autre. La compensation C2 est alors affectée par tout moyen adapté au conducteur.

Lorsque le premier passager descend à son tour, le téléphone intelligent 14-1 du premier passager n'est plus en relation avec les moyens d'identification 10 associés au conducteur. Dès lors, le procédé et donc l'application logicielle associée, prévoit de nouveau la connexion par le téléphone intelligent 14-1 au serveur 16 de façon à enregistrer l'identifiant ID10 des moyens d'identification 10 associés au conducteur, l'identifiant ID14-1 du téléphone intelligent 14-1 du premier passager, la localisation L14-1S lors de la sortie du premier passager du véhicule et l'horodatage H14-1S lors de la sortie dudit premier passager du véhicule. Voir figure 5.

Le serveur 16 dispose alors des données du départ et de l'arrivée du trajet permettant de calculer la compensation C1 correspondante, suivant le même barème établi applicable à tous les passagers utilisant l'application logicielle.

La compensation financière C1 est alors affectée par tout moyen adapté au conducteur.

Le procédé selon la présente invention permet ainsi un calcul de distance réelle et de la compensation la plus juste.

Il est d'ailleurs possible d'enregistrer des points intermédiaires de façon à se rapprocher au mieux du trajet effectué, notamment lorsqu'il est prévu un détour, un contournement ou un circuit proche d'une boucle.

Cet enregistrement des points peut être réalisé suivant une base temps, avec les intervalles de x minutes ou volontairement sur intervention du conducteur par action manuelle ou vocale.

Lorsque le serveur 16 a enregistré l'affectation de la compensation C1, alors il permet au passager muni du téléphone intelligent 14-1 de remonter dans un autre véhicule et de réaliser un autre co-voiturage.

Les moyens de compensation peuvent être affectés instantanément à la sortie du véhicule car le passager muni du téléphone intelligent 14-1 n'a plus qu'à valider une demande de compensation d'une valeur C1 de la part du serveur 16. Cette compensation peut être financière sous forme d'un "prélèvement" à travers un porte-monnaie électronique par exemple ou sous forme d'une affectation à un compte kilométrique.

De même pour le paiement de la compensation C2 par le passager muni du téléphone 14-2. Dans le cas où la compensation n'est pas effectuée par le passager sortant, l'accès pour la mise en oeuvre du procédé est interdit à partir du téléphone intelligent pour lequel une dette compensatoire est en cours.

Concernant le conducteur, l'identifiant ID14C associé aux moyens d'identification 10, le serveur 16 enregistre la localisation L14CE d'entrée du conducteur dans le véhicule et l'horodatage H14CE ainsi que la localisation L14CS et l'horodatage H14CS lors de la sortie du conducteur du véhicule. Voir figure 6.

De fait, il n'y a aucune compensation déclenchée mais le serveur 16 dispose des données du départ et d'arrivée du trajet TT d'un conducteur possédant un téléphone intelligent.

Ces données peuvent permettre de générer lorsque ledit trajet se reproduit un trajet type TT notamment un trajet domicile / lieu de travail, surtout lorsque ce trajet est associé à une plage horaire également répétitive.

Il convient alors de définir une plage horaire autour d'une moyenne calculée par rapport aux horodatages enregistrés et de prévoir une distance environnante par rapport aux points finaux enregistrés pour tenir compte des approximations liées à l'emplacement choisi de parking du véhicule par exemple, aux variations de l'horaire de départ.

Dès lors, le trajet type TT est identifié lorsque la fréquence n est au minimum égale à une valeur donnée, par exemple 5. On peut aussi fixer d'autres paramètres comme une fréquence n pour un même jour et/ou une fréquence sur plusieurs jours consécutifs. Il est alors possible de comparer le trajet type TT avec le trajet effectué par d'autres conducteurs ou passagers, dans la même plage horaire. Le serveur 16 détient une information selon laquelle un conducteur ou un passager effectue le même trajet TT.

Un message peut alors informer les différents téléphones intelligents de la situation. Le procédé prévoit alors que chacun des propriétaires des téléphones intelligents concernés peut prendre contact ou non pour organiser un co-voiturage.

Dès lors que le trajet type ne respecte plus les critères enregistrés, le trajet type TT est supprimé des offres.

Les conducteurs et/ou passagers munis d'un téléphone intelligent sur lequel l'application logicielle est chargée, peuvent ainsi rechercher de façon connue sur la base de données du serveur 16 par tout critère, mais les conducteurs et/ou passagers peuvent être sollicités, en plus, pour des co-voiturages, plus particulièrement des co-voiturages réguliers.

On établit ainsi la fréquence n d'un trajet type TT effectué par un conducteur dans une plage horaire donnée, on établit la fréquence m d'un trajet effectué par au moins un passager dans la même plage horaire et en fonction d'un seuil de fréquence n, on informe ledit au moins un passager que ledit conducteur effectue ledit trajet dans ladite plage horaire.

Le conducteur peut être aussi un passager et le passager peut aussi être un conducteur.

Ces propositions peuvent évoluer au cours du temps et dès lors qu'un trajet n'est plus effectué régulièrement, l'application logicielle peut considérer que le trajet est devenu non régulier et ce trajet n'est plus proposé.

De façon perfectionnée, le procédé prévoit aussi de solliciter un utilisateur conducteur ou passager s'il effectue une partie seulement du trajet TT effectué par un autre passager / conducteur.

Le procédé prévoit aussi la détection de toute rupture de la localisation du téléphone intelligent si le passager muni de son téléphone intelligent venait à désactiver la fonction de localisation par exemple ou la fonction BLE. Une telle rupture de liaison conduirait à des erreurs de calcul de la compensation financière. Ceci évite également toute fraude.

De façon complémentaire, les passagers d'un même véhicule et le conducteur peuvent être informés de chaque action, par exemple l'entrée ou la sortie d'un passager.

## Revendications

1. Procédé de détection d'au moins un passager muni d'un téléphone intelligent (14-1, 14-2) dans un véhicule conduit par un conducteur muni d'un téléphone intelligent (14C), pour la gestion et l'optimisation de leurs transports partagés, un serveur (16) faisant intervenir le réseau mondial de communication Internet, joignable par chacun des téléphones intelligents (14) grâce à son adresse IP, ledit serveur (16) pouvant joindre chacun desdits téléphones intelligents (14) afin d'établir une communication, **caractérisé en ce qu'**il comprend les étapes suivantes :
- Association au conducteur du véhicule d'un identifiant ID10 de moyens d'identification (10) à courte portée couvrant sensiblement les dimensions donc le volume dudit véhicule,
- Détection de cet identifiant ID10 des moyens d'identification (10) par le téléphone intelligent (14C) associé au conducteur avec un identifiant ID14C,
- Enregistrement dans le serveur (16) de l'identifiant ID10 des moyens d'identification (10) associés au conducteur, de l'identifiant ID14C du téléphone intelligent (14C) du conducteur, de la localisation L14CE de l'entrée dans le véhicule et de l'horodatage H14CE de l'entrée dudit conducteur dans le véhicule, ces informations à enregistrer dans le serveur (16) étant transmises au serveur (16) par ledit téléphone intelligent (14C),
- Enregistrement dans le serveur (16) de l'identifiant ID10 des moyens d'identification (10) associés au conducteur lors de l'entrée dans ledit véhicule d'un passager équipé d'un téléphone intelligent (14-1), l'entrée étant détectée par le téléphone intelligent (14-1) de ce passager en lien à courte portée avec les moyens d'identification (10) et enregistrement dans le serveur (16) de l'identifiant ID14-1 du téléphone intelligent (14-1) de ce passager, de la localisation L14-1E lors de l'entrée du premier passager dans le véhicule ainsi que de l'horodatage H14-1E de l'entrée dudit passager dans le véhicule, les informations à enregistrer dans le serveur (16) étant transmises au serveur (16) par le téléphone (14-1) du passager,
- Déplacement du véhicule et arrêt du véhicule,
- Enregistrement dans le serveur (16) de la sortie dudit passager dudit véhicule détectée par le téléphone intelligent (14-1) de ce passager en lien à courte portée avec les moyens d'identification (10), enregistrement dans le serveur (16) de l'identifiant ID10 des moyens d'identification (10) associés au conducteur, de l'identifiant ID14-1 du téléphone intelligent (14-1), de la localisation L14-1S de la sortie du passager du véhicule ainsi que de l'horodatage H14-1S de la sortie dudit passager du véhicule, les informations à enregistrer dans le serveur (16) étant transmises au serveur (16) par le téléphone (14-1) du passager,
- Calcul des trajets effectués par le conducteur et par ledit passager.

2. Procédé de détection d'au moins un passager muni d'un téléphone intelligent (14-1, 14-2) dans un véhicule conduit par un conducteur muni d'un téléphone intelligent (14C), selon la revendication 1, **caractérisé en ce qu'**il comprend une étape de calcul de la compensation C due par le passager au conducteur, à partir du trajet effectué par le passager.

3. Procédé de détection d'au moins un passager muni d'un téléphone intelligent (14-1, 14-2) dans un véhicule conduit par un conducteur muni d'un téléphone intelligent (14C), selon la revendication 1 ou 2, **caractérisé en ce qu'**il comprend une étape d'établissement de la fréquence n d'un trajet type TT effectué par un conducteur dans une plage horaire donnée, on établit la fréquence m d'un trajet effectué par au moins un passager dans la même plage horaire et en fonction d'un seuil de fréquence n, on informe ledit au moins un passager que ledit conducteur effectue ledit trajet dans ladite plage horaire.

4. Procédé de détection d'au moins un passager muni d'un téléphone intelligent (14-1, 14-2) dans un véhicule conduit par un conducteur muni d'un téléphone intelligent (14C), selon la revendication 3, **caractérisé en ce que**, pour établir un trajet type TT, il comprend une étape d'analyse la fréquence n pour un même jour et/ou la fréquence sur plusieurs jours consécutifs.

5. Procédé de détection d'au moins un passager muni d'un téléphone intelligent (14-1, 14-2) dans un véhicule conduit par un conducteur muni d'un téléphone intelligent (14C), selon la revendication 2, 3 ou 4, **caractérisé en ce qu'**il comprend une étape de définition d'une plage horaire sur une moyenne calculée par rapport aux horodatages enregistrés et à une distance environnante par rapport aux points finaux enregistrés.

## Patentansprüche

1. Detektionsverfahren für mindestens einen mit einem Smartphone (14,1, 14-2) ausgestatteten Passagier in einem Fahrzeug, das von einem mit einem Smartphone (14C) ausgestatteten Fahrer gefahren wird, für die Verwaltung und Optimierung ihrer geteilten Transporte, wobei ein Server (16) das weltweite Kommunikationsnetzwerk Internet zum Einsatz bringt, der über seine IP-Adresse von beiden Smartphones (14) erreichbar ist, wobei auch der Server (16) beide Smartphones (14) erreichen kann, um eine Kommunikation herzustellen, **dadurch gekennzeichnet, dass** es folgende Schritte umfasst:
- Zuordnung zum Fahrer des Fahrzeugs eines Nutzernamens ID10 für Identifikationsmittel (10) von kurzer Reichweite, die im Wesentlichen die Abmessungen und daher den Innenraum des Fahrzeugs abdecken,
- Detektion dieses Nutzernamens ID10 für Identifikationsmittel (10) durch das dem Fahrer zugeordnete Smartphone (14C) mit einem Nutzernamen ID14C,
- Speichern im Server (16) des dem Fahrer zugeordneten Nutzernamens ID10 für Identifikationsmittel (10), des Nutzernamens ID14C des Smartphones (14C) des Fahrers, der Lokalisierung L14CE des Einsteigens in das Fahrzeug und des Zeitstempels H14CE des Einsteigens des Fahrers in das Fahrzeug, wobei diese im Server (16) zu speichernden Informationen durch das Smartphone (14C) an den Server (16) übertragen werden,
- Speichern im Server (16) des dem Fahrer zugeordneten Nutzernamens ID10 für Identifikationsmittel (10) beim Einsteigen eines mit einem Smartphone (14-1) ausgestatteten Passagiers in das Fahrzeug, wobei das Einsteigen vom Smartphone (14-1) dieses Passagiers in Verbindung mit den Identifikationsmitteln (10) mit kurzer Reichweite erkannt wird, sowie Speichern im Server (16) des Nutzernamens ID14-1 des Smartphones (14-1) dieses Passagiers, der Lokalisierung L14-1E beim Einsteigen des ersten Passagiers in das Fahrzeug sowie des Zeitstempels H14-1E des Einsteigens dieses Passagiers in das Fahrzeug, wobei die im Server (16) zu speichernden Informationen vom Telefon (14-1) des Passagiers an den Server (16) übertragen werden,
- Fahren des Fahrzeugs und Anhalten des Fahrzeugs,
- Speichern im Server (16) des Aussteigens dieses Passagiers aus dem Fahrzeug, was vom Smartphone (14-1) dieses Passagiers in Verbindung mit den Identifikationsmitteln (10) mit kurzer Reichweite erkannt wird, sowie Speichern im Server (16) des dem Fahrer zugeordneten Nutzernamens ID10 für Identifikationsmittel (10), des Nutzernamens ID14-1 des Smartphones (14-1), der Lokalisierung L14-1S des Aussteigens des Passagiers aus dem Fahrzeug sowie des Zeitstempels H14-1S des Aussteigens des Passagiers aus dem Fahrzeug, wobei die im Server (16) zu speichernden Informationen vom Telefon (14-1) des Passagiers an den Server (16) übertragen werden,
- Berechnung der vom Fahrer und vom Passagier zurückgelegten Strecken.

2. Detektionsverfahren für mindestens einen, mit einem Smartphone (14,1, 14-2) ausgestatteten Passagier in einem Fahrzeug, das von einem mit einem Smartphone (14C) ausgestatteten Fahrer gefahren wird, nach Anspruch 1, **dadurch gekennzeichnet, dass** es einen Schritt umfasst, bei dem der vom Passagier dem Fahrer geschuldeten Entgeltungsbetrag C für die vom Passagier zurückgelegte Fahrtstrecke berechnet wird.

3. Detektionsverfahren für mindestens einen, mit einem Smartphone (14,1, 14-2) ausgestatteten Passagier in einem Fahrzeug, das von einem mit einem Smartphone (14C) ausgestatteten Fahrer gefahren wird, nach Anspruch 1 bzw. 2, **dadurch gekennzeichnet, dass** es einen Schritt umfasst, bei dem die Häufigkeit n einer von einem Fahrer während eines bestimmten Zeitabschnitts zurückgelegten Standardstrecke TT ermittelt wird, und bei dem die Häufigkeit m einer von mindestens einem Passagier während des gleichen Zeitabschnitts zurückgelegten Fahrtstrecke bestimmt wird, und bei dem abhängig von einem Häufigkeitsschwellenwert n der mindestens eine Passagier darüber informiert wird, dass dieser Fahrer diese Fahrtstrecke im selben Zeitabschnitt zurücklegt.

4. Detektionsverfahren für mindestens einen, mit einem Smartphone (14,1, 14-2) ausgestatteten Passagier in einem Fahrzeug, das von einem mit einem Smartphone (14C) ausgestatteten Fahrer gefahren wird, nach Anspruch 3, **dadurch gekennzeichnet, dass** es zur Bestimmung einer Standardstrecke TT einen Schritt umfasst, bei dem die Häufigkeit n an einem einzigen Tag und/oder die Häufigkeit an mehreren aufeinander folgenden Tagen analysiert wird.

5. Detektionsverfahren für mindestens einen, mit einem Smartphone (14,1, 14-2) ausgestatteten Passagier in einem Fahrzeug, das von einem mit einem Smartphone (14C) ausgestatteten Fahrer gefahren wird, nach Anspruch 2, 3 bzw. 4, **dadurch gekennzeichnet, dass** es einen Schritt umfasst, bei dem anhand eines berechneten Durchschnittwerts in Bezug zu den gespeicherten Zeitstempeln und in einer umgebenden Distanz in Bezug zu den gespeicherten Endpunkten ein Zeitabschnitt bestimmt wird.

## Claims

1. Method for detecting at least one rider with a smartphone (14-1, 14-2) in a vehicle driven by a driver with a smartphone (14C) for managing and optimizing their shared trips, a server (16), connected to the Internet global communication network, which can be joined by each of the smartphones (14) using its IP address, with said server (16) being able to join each of said smartphones (14) so as to establish communication, **characterized in that** it comprises the following steps:
- Association with the driver of the vehicle of an identifier ID10 of short-range identification means (10) that cover essentially the size, i.e., the volume of said vehicle,
- Detection of this identifier ID10 of the identification means (10) by a smartphone 14C associated with the driver with an identifier ID14C,
- Recording in the server (16) of the identifier ID10 of the identification means (10) associated with the driver, the identifier ID14C of the smartphone 14C of the driver, the location L14CE of the entry into the vehicle, and the timestamp H14CE of the entry of said driver into the vehicle, this information to be recorded in the server (16) being transmitted to the server (16) by said smartphone (14C),
- Recording in the server (16) of the identifier ID10 of the identification means (10) associated with the driver, during the entry of a rider into said vehicle, of the identifier ID14-1 of the smartphone 14-1 of this rider, the entrance of the rider being detected by the smartphone (14-1) of said rider in short range communication with the identification means (10) and recording in the sever (16) of the identifier ID14-1 of the smartphone (14-1) of this rider of the identifier, of the location L14-1E during the entry of the first rider into the vehicle, and of the timestamp H14-1E of the entry of said rider into the vehicle, information to be recorded in the sever being transmitted to the server (16) by the smartphone (14-1) of the rider,
- Movement of the vehicle,
- Recording in the server (16), of the exit of said rider from said vehicle, detected by the smartphone (14-1) of this rider in communication of the in short range communication with the identification means (10), recording in the server (16) of the identifier ID10 identification means (10) associated with the driver, of the identifier ID14-1 of the smartphone (14-1), of the location L14-1S of the exit of the rider from the vehicle, and of the timestamp H14-1S of the exit of said rider from the vehicle, information to be recorded in the server (16) being transmitted to the server (16) by the smartphone (14-1),
- Calculation of the trips made by the driver and by said rider.

2. Method for detecting at least one rider with a smartphone (14-1, 14-2) in a vehicle driven by a driver with a smartphone (14C) according to Claim 1, **characterized in that** it comprises a step for calculating the compensation C owed by the rider to the driver, starting from the trip carried out by the rider.

3. Method for detecting at least one rider with a smartphone (14-1, 14-2) in a vehicle driven by a driver with a smartphone (14C) according to Claim 1 or 2, **characterized in that** it comprises a step for establishing the frequency n of a trip type TT carried out by a driver in a given hourly range; the frequency m of a trip carried out by at least one rider is established in the same hourly range and based on a frequency threshold n; said at least one rider is informed that said driver is completing said trip in said hourly range.

4. Method for detecting at least one rider with a smartphone (14-1, 14-2) in a vehicle driven by a driver with a smartphone (14C), according to Claim 3, **characterized in that** to establish a trip type TT, it comprises a step for analysis of the frequency n for the same day and/or the frequency over several consecutive days.

5. Method for detecting at least one rider with a smartphone (14-1, 14-2) in a vehicle driven by a driver with a smartphone (14C), according to Claim 2, 3 or 4, **characterized in that** it comprises a step for defining an hourly range over an average calculated in relation to the recorded timestamps and to a surrounding distance in relation to the endpoints recorded.
